# EUROPÄISCHE PATENTANMELDUNG

(11) **EP 2 873 484 A1**
(43) Veröffentlichungstag der Anmeldung: **20.05.2015**
(21) Anmeldenummer: 13193006.7
(22) Anmeldetag: 15.11.2013
(51) Int. Cl.: B23Q 17/24, B23Q 1/01, B23Q 1/76, B23Q 37/00

(54) **CNC-Bearbeitungsmaschine**

(71) Anmelder: Siemens Aktiengesellschaft, 80333 München (DE)
(72) Erfinder: Die Erfindernennung liegt noch nicht vor

(57) **Zusammenfassung**

Die Erfindung betrifft eine CNC-Bearbeitungsmaschine (1), die zur Bearbeitung von Dampfturbinen- und Gasturbinen- sowie Generatorläufern ausgelegt ist, mit einem Spindelstock (3), einem Reitstock (5), zumindest zwei Lagerböcken (7, 8) und wenigstens einem Werkzeugmodul (9), wobei das Werkzeugmodul (9) derart ausgelegt ist, dass es ein Bewegen eines an diesem gehaltenen Werkzeugs zumindest entlang der X-, Y- und Z-Achse der CNC-Bearbeitungsmaschine (1) gestattet, wobei die CNC-Bearbeitungsmaschine (1) mehrere Bodenplatten (2a-e) aufweist, wobei der Spindelstock (3), der Reitstock (5), die Lagerböcke (7, 8) und das Werkzeugmodul (9) jeweils an einer Bodenplatte (2a-e) lösbar befestigt sind, und wobei zumindest einige der Bodenplatten (2a-e) im bestimmungsgemäß montierten Zustand der CNC-Bearbeitungsmaschine (1) getrennt und voneinander beabstandet auf einem Untergrund angeordnet sind.

## Beschreibung

Die vorliegende Erfindung betrifft eine CNC-Bearbeitungs- maschine, die zur Bearbeitung von Dampfturbinen- und Gasturbinen- sowie Generatorläufern ausgelegt ist, mit einem Spindelstock, der ein Spindelstockspannfutter oder eine Kardankupplung aufweist, einem Reitstock, der ein Reitstockspannfutter aufweist, zumindest zwei Lagerböcken und wenigstens einem Werkzeugmodul, wobei das Werkzeugmodul derart ausgelegt ist, dass es ein Bewegen eines an diesem gehaltenen Werkzeugs zumindest entlang der X-, Y- und Z-Achse der CNC-Bearbeitungsmaschine gestattet. Die Y-Achse erstreckt sich dabei in einer Richtung senkrecht zum Maschinenbett, die X-Achse in Querrichtung des Maschinenbetts und die Z-Achse in Längsrichtung des Maschinenbetts.

Derartige CNC-Bearbeitungsmaschinen sind als Dreh-, Schleif- und/oder Fräsmaschinen in unterschiedlichsten Ausgestaltungen bekannt und werden ortsfest in Maschinenhallen aufgestellt. Grundsätzlich werden sie dabei an speziell ausgelegten Maschinenfundamenten verankert. Zur Bearbeitung von Turbinenund Generatorläufern sowie Induktoren werden die Werkstücke zur Maschinenhalle transportiert, wo sie dann unter Verwendung der CNC-Bearbeitungsmaschine spanend bearbeitet werden. Hauptanwendungsgebiete sind beispielsweise das Rundschleifen der Außendurchmesser von Schaufelspitzen und das Nachfräsen von Schaufelfußnuten, um nur einige Beispiele zu nennen.

Ein Nachteil solcher CNC-Bearbeitungsmaschinen zur Bearbeitung von Turbinen- und Generatorläufern sowie Induktoren besteht darin, dass der Transport der Werkstücke zu den jeweiligen Maschinenhallen mit langen Ausfallzeiten derjenigen Anlagen einhergeht, in denen die Werkstücke normalerweise im Einsatz sind, was nicht wünschenswert ist.

Ausgehend von diesem Stand der Technik ist es eine Aufgabe der vorliegenden Erfindung, eine CNC-Bearbeitungsmaschine der eingangs genannten Art zu schaffen, die einen alternativen Aufbau aufweist und deren Verwendung mit geringen Anlagenausfallzeiten einhergeht.

Zur Lösung dieser Aufgabe schafft die vorliegende Erfindung eine CNC-Bearbeitungsmaschine der eingangs genannten Art, die dadurch gekennzeichnet ist, dass sie mehrere Bodenplatten aufweist, wobei der Spindelstock, der Reitstock, die Lagerböcke und das Werkzeugmodul jeweils an einer Bodenplatte lösbar befestigt sind, und wobei zumindest einige der Bodenplatten im bestimmungsgemäß montierten Zustand der CNC-Bearbeitungsmaschine getrennt und voneinander beabstandet auf einem Untergrund angeordnet sind. Mit anderen Worten ist die erfindungsgemäße CNC-Bearbeitungsmaschine weder auf einem festen Fundament angeordnet, noch weist sie ein zusammenhängendes Maschinenbett auf. Erfindungsgemäß sind die einzelnen Komponenten, also der Spindelstock, der Reitstock, die Lagerböcke und das Werkzeugmodul, an zumindest teilweise unabhängig voneinander vorgesehenen Bodenplatten angeordnet, wobei die Befestigung der Komponenten auf den jeweiligen Bodenplatten lösbar erfolgt. Die erfindungsgemäße CNC-Bearbeitungsmaschine ist somit modular aufgebaut, was dahingehend von Vorteil ist, dass sie sich in ihrem in die einzelnen Komponenten zerlegten Zustand einfach transportieren und örtlich variabel montieren lässt. Entsprechend kann die erfindungsgemäße CNC-Bearbeitungsmaschine zu dem zu bearbeitenden Werkstück transportiert werden, so dass sich die Stillstandzeiten derjenigen Anlagen, in denen die zu bearbeitenden Werkstücke eingesetzt werden, wesentlich verkürzen lassen, wodurch enorme Kosten eingespart werden können. Mit der Tatsache, dass die Bodenplatten der erfindungsgemäßen CNC-Bearbeitungsmaschine kein zusammenhängendes Maschinenbett bilden, sondern im bestimmungsgemäß montierten Zustand der CNC-Bearbeitungsmaschine zumindest teilweise, bevorzugt jedoch vollständig getrennt und voneinander beabstandet auf einem Untergrund angeordnet sind, geht eine erhebliche Gewichtsreduktion der erfindungsgemäßen CNC-Bearbeitungsmaschine einher, was für die Handhabbarkeit der CNC-Bearbeitungsmaschine während ihres Transports von entscheidender Bedeutung ist.

Der Spindelstock, der Reitstock, die Lagerböcke und das Werkzeugmodul weisen bevorzugt jeweils derartige Abmessungen auf oder sind derart in vorbestimmte Teilkomponenten zerlegbar ausgeführt, dass sie in Luftfrachtcontainern aufgenommen und transportiert werden können. Entsprechend lässt sich die erfindungsgemäße CNC-Bearbeitungsmaschine in kurzer Zeit an nahezu jeden Ort verbringen.

Vorteilhaft beträgt das Eigengewicht des Spindelstocks, des Reitstocks, der Lagerböcke und des Werkzeugmoduls oder das Eigengewicht ihrer Teilkomponenten jeweils 4,8 t oder weniger. Dieses Gewicht stellt in den meisten Fällen das maximale Luftfrachtcontainerfüllgewicht dar, das gehandhabt und transportiert werden kann.

Gemäß einer Ausgestaltung der vorliegenden Erfindung sind die Bodenplatten an ihrer Oberseite mit Nuten zur Befestigung des Spindelstocks, des Reitstocks, der Lagerböcke und des Werkzeugmoduls versehen. Derartige Nuten ermöglichen eine einfache und schnelle Befestigung der genannten Komponenten an den jeweiligen Bodenplatten.

Die Bodenplatten sind vorteilhaft mit als Sicherungspunkte dienenden Durchgangsbohrungen versehen, in die Befestigungselemente zum optionalen Verdübeln der Bodenplatten an einem Untergrund einsetzbar sind. Dank solcher Durchgangsbohrungen lassen sich die Bodenplatten ortsfest an einem Untergrund fixieren, auch wenn dies für viele Anwendungsfälle nicht unbedingt erforderlich ist. Zur Fixierung können beispielsweise Gabelspanneisen oder dergleichen verwendet werden.

Bevorzugt umfasst die CNC-Bearbeitungsmaschine Höhenausrichtelemente zur Höhenausrichtung der Bodenplatten, die insbesondere lösbar mit den Bodenplatten verbunden werden können. Mit derartigen Höhenausrichtelementen lassen sich Unebenheiten des Untergrunds beim Aufstellen der CNC-Bearbeitungsmaschine ausgleichen.

Gemäß einer Variante der vorliegenden Erfindung ist das Werkzeugmodul zur Aufnahme von Drehwerkzeugen, Schleifwerkzeugen und/oder Fräswerkzeugen ausgelegt. Mit anderen Worten können mit der CNC-Bearbeitungsmaschine Drehbearbeitungen und/oder Schleifbearbeitungen und/oder Fräsbearbeitungen durchgeführt werden. Je mehr Bearbeitungsarten mit der CNC-Bearbeitungsmaschine durchführbar sind, desto flexibler ist ihre Einsetzbarkeit.

Gemäß einer Ausgestaltung der vorliegenden Erfindung weisen die Lagerböcke im Bereich ihrer Lagerfläche eine hydrostatische Lagerschale auf. Auf diese Weise wird ein sehr einfacher Aufbau erzielt.

Gemäß einer Ausgestaltung der vorliegenden Erfindung weisen die Spannfutter des Spindelstocks und des Reitstocks Spannbereiche von 600 mm bis 1.200 mm auf.

Bevorzugt ist die erfindungsgemäße CNC-Bearbeitungsmaschine für die Bearbeitung von Werkstücklängen von zumindest 2.000 mm, von Werkstückdurchmessern von zumindest 1.000 mm und eines Werkstückgewichtes von zumindest 10 t ausgelegt.

Vorteilhaft ist die Auslegung derart, dass die CNC-Bearbeitungsmaschine für die Bearbeitung von Werkstücklängen von 12.000 mm, von Werkstückdurchmessern von 4.500 mm und eines Werkstückgewichts von 200 t ausgelegt ist. Damit lassen sich sämtliche gängigen Turbinen- und Generatorläufer sowie Induktoren bearbeiten.

Gemäß einer Ausführungsform der vorliegenden Erfindung sind der Spindelstock, der Reitstock, die Lagerböcke und das Werkzeugmodul jeweils an vorbestimmten Positionen mit mehreren Reflektoren versehen, die derart ausgebildet und angeordnet sind, dass sich die besagten Komponenten unter Verwendung eines Laserausrichtsystems relativ zueinander ausrichten lassen. Das Laserausrichtsystem kann hierfür beispielsweise derart ausgestaltet sein, dass ein Laserstrahl nacheinander in einer vorbestimmten Reihenfolge automatisch oder manuell auf sämtliche Reflektoren gerichtet wird, die Ist-Positionen der jeweiligen Reflektoren erfasst werden, die erfassten Ist-Positionen in einer Auswerteeinrichtung mit vorab definierten Soll-Positionen verglichen und als Ergebnis Anweisungen an das Bedienpersonal ausgegeben werden, in welcher Art und Weise die Ist-Positionen der einzelnen Komponenten verändert werden müssen, um den Soll-Zustand herzustellen.

Bevorzugt sind pro Komponente wenigstens vier Reflektoren vorgesehen.

Zur Lösung der eingangs genannten Aufgabe schafft die vorliegende Erfindung ferner ein Verfahren zur Bearbeitung wenigstens eines Werkstücks in Form eines Dampfturbinen-, eines Gasturbinen- oder eines Generatorläufers einer Anlage unter Verwendung einer CNC-Bearbeitungsmaschine, insbesondere unter Verwendung einer erfindungsgemäßen CNC-Bearbeitungsmaschine, wobei das Verfahren die Schritte aufweist:
- Zerlegen der CNC-Bearbeitungsmaschine in einzelne vorbestimmte Komponenten und/oder Teilkomponenten;
- Verpacken der Komponenten und/oder Teilkomponenten in Luftfrachtcontainern;
- Transportieren der Luftfrachtcontainer zur Anlage;
- Zusammenbauen der CNC-Bearbeitungsmaschine;
- Bearbeiten des wenigstens einen Werkstückes unter Verwendung der CNC-Bearbeitungsmaschine;
- Zerlegen der CNC-Bearbeitungsmaschine in die vorbestimmten Komponenten und/oder Teilkomponenten;
- Verpacken der Komponenten und/oder Teilkomponenten in den Luftfrachtcontainern;
- Abtransport der Luftfrachtcontainer.

Bevorzugt erfolgt der Zusammenbau der CNC-Bearbeitungsmaschine unter Verwendung eines Laserausrichtsystems, wobei einzelne Komponenten der CNC-Bearbeitungsmaschine unter Einsatz des Laserausrichtsystems relativ zueinander ausgerichtet werden.

Vorteilhaft ist die CNC-Bearbeitungsmaschine für die Bearbeitung von Werkstücklängen von zumindest 2.000 mm, von Werkstückdurchmessern von zumindest 1.000 mm und eines Werkstückgewichtes von zumindest 10 t ausgelegt.

Weitere Merkmale und Vorteile der vorliegenden Erfindung werden anhand der nachfolgenden Beschreibung einer CNC-Bearbeitungsmaschine gemäß einer Ausführungsform der vorliegenden Erfindung unter Bezugnahme auf die beiliegende Zeichnung deutlich. Darin ist
Figur 1 eine schematische perspektivische Ansicht, die eine CNC-Bearbeitungsmaschine gemäß einer Ausführungsform der vorliegenden Erfindung im montierten Zustand bei der Bearbeitung eines Gasturbinenläufers zeigt;
Figur 2 eine schematische perspektivische Ansicht, welche die in Figur 1 dargestellte CNC-Bearbeitungsmaschine ohne Gasturbinenläufer zeigt;
Figur 3 eine schematische perspektivische Ansicht, die einen Luftfrachtcontainer zeigt, in dem eine erste Teilkomponente eines Werkzeugmoduls der in den Figuren 1 und 2 dargestellten CNC-Bearbeitungsmaschine aufgenommen ist;
Figur 4 eine schematische perspektivische Ansicht, die einen Luftfrachtcontainer zeigt, in dem eine zweite Teilkomponente des Werkzeugmoduls aufgenommen ist;
Figur 5 eine schematische perspektivische Ansicht eines Luftfrachtcontainers, in dem ein Teil eines Spindelstocks der in den Figuren 1 und 2 dargestellten CNC-Bearbeitungsmaschine aufgenommen ist;
Figur 6 eine schematische perspektivische Ansicht eines Luftfrachtcontainers, in dem ein Teil eines Reitstocks der in den Figuren 1 und 2 dargestellten CNC-Bearbeitungsmaschine aufgenommen ist;
Figur 7 eine schematische perspektivische Ansicht eines Luftfrachtcontainers, in dem ein Lagerbock der in den Figuren 1 und 2 dargestellten CNC-Bearbeitungsmaschine aufgenommen ist; und
Figur 8 eine schematische Seitenansicht der in Figur 1 dargestellten CNC-Bearbeitungsmaschine während des Ausrichtens von Komponenten.

Die Figuren zeigen eine CNC-Bearbeitungsmaschine 1 gemäß einer Ausführungsform der vorliegenden Erfindung, die zur Bearbeitung von Dampfturbinen- und Gasturbinen- und Generatorläufern ausgelegt ist. Die CNC-Bearbeitungsmaschine 1 ist modular aufgebaut und umfasst als Module bzw. als Einzelkomponenten fünf Bodenplatten 2a-e, einen Spindelstock 3 mit einem Spindelstockspannfutter 4, einen Reitstock 5 mit einem Reitstockspannfutter 6, zwei Lagerböcke 7, 8 sowie ein Werkzeugmodul 9. Weitere Einzelkomponenten, wie beispielsweise Schaltschränke oder dergleichen, sind in den Figuren der Einfachheit halber nicht dargestellt.

Der Spindelstock 3, der Reitstock 5, der Lagerbock 7, der Lagerbock 8 und das Werkzeugmodul 9 sind jeweils lösbar auf einer zugeordneten Bodenplatte 2a-e befestigt. An der Oberseite der Bodenplatten 2a-e sind hierfür entsprechende Nuten 10 ausgebildet, in die dem Fachmann bekannte Befestigungsmittel eingreifen. Die Anzahl, die Positionierung und die Art der Befestigungsmittel sind derart zu wählen, dass die erforderliche Genauigkeit und Steifheit der jeweiligen Verbindung erzielt wird. Die Bodenplatten 2a-e sind mit Durchgangsbohrungen versehen, die sich ausgehend von der Oberseite der Bodenplatten 2a-e zu den Unterseiten erstrecken. In diese Durchgangsbohrungen 12 können Befestigungselemente zum Verdübeln der Bodenplatten 2a-e an einem Untergrund eingesetzt werden, wie beispielsweise Gabelspanneisen oder dergleichen. Entsprechend lassen sich die Bodenplatten 2a-e bei Bedarf an einem Untergrund fixieren. Die Abmessungen der jeweiligen Bodenplatten 2a-e sind auf die der aufzunehmenden Komponenten abgestimmt.

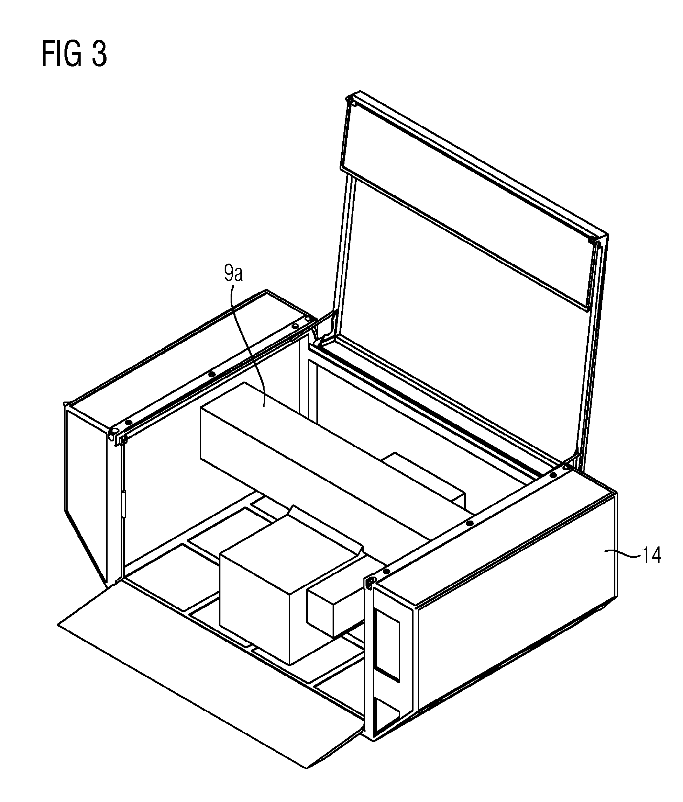

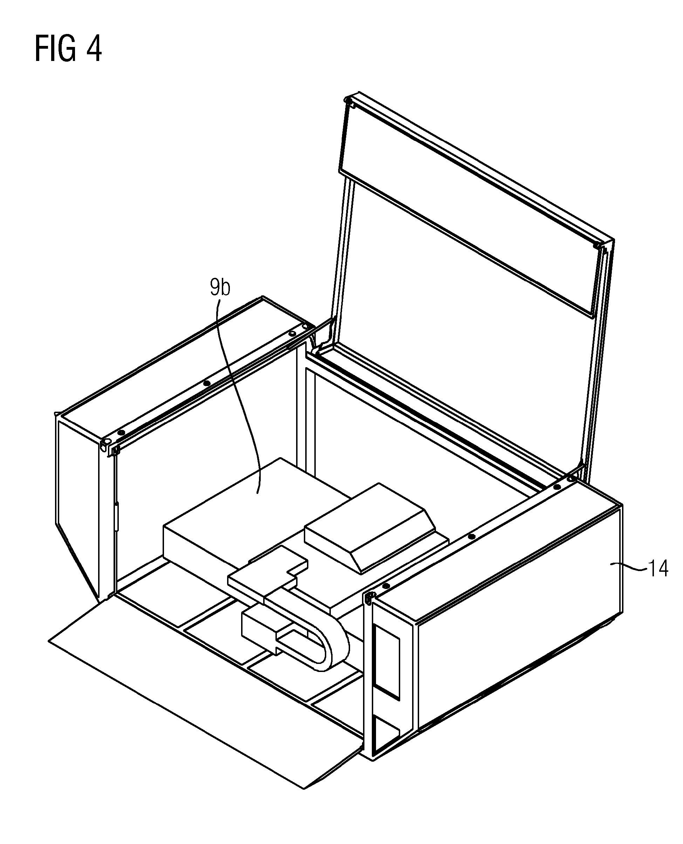

Das Werkzeugmodul 9 ist zur Aufnahme von nicht näher dargestellten Werkzeugen ausgelegt, bei denen es sich um Drehwerkzeuge, Schleifwerkzeuge oder Fräswerkzeuge handeln kann. Als Werkzeugaufnahme ist vorliegend eine HSK-100 Bohr-Dreh-Frässpindel vorgesehen, wobei natürlich auch andere geeignete Werkzeugaufnahmen verwendet werden können. Das Werkzeugmodul 9 ist als Fahrständer ausgelegt, so dass das an diesem gehaltene Werkzeug in bekannter Weise in X-, Y- oder Z-Richtung verfahren werden kann. Der Verfahrweg in Z-Richtung beträgt vorliegend 2.000 mm, der Verfahrweg in X-Richtung 1.200 mm und der Verfahrweg in Y-Richtung ± 500 mm um die 0-Lage des zu bearbeitenden Werkstückes. Das Werkzeugmodul 9 ist vorliegend in zwei Teilkomponenten zerlegbar, und zwar in eine obere Teilkomponente 9a und in eine untere Teilkomponente 9b, wie es unter Bezugnahme auf die Figuren 3 und 4 noch näher erläutert wird.

Die Lagerböcke 7, 8 sind im Bereich ihrer Lagerfläche mit hydrostatischen Lagerschalen 13 versehen. Die Lagerböcke 7, 8 decken jeweils Durchmesser zwischen 200 mm und 900 mm ab.

Die CNC-Bearbeitungsmaschine 1 ist insgesamt für maximale Werkstücklängen von 12.000 mm, für maximale Werkstückdurchmesser von 4.500 mm und für ein maximales Werkstückgewicht von 200 t ausgelegt.

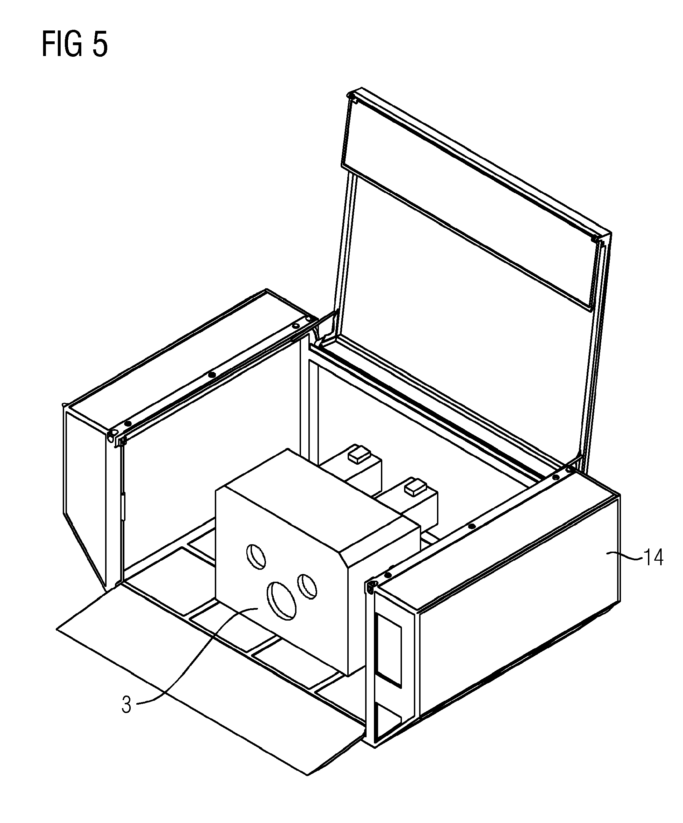

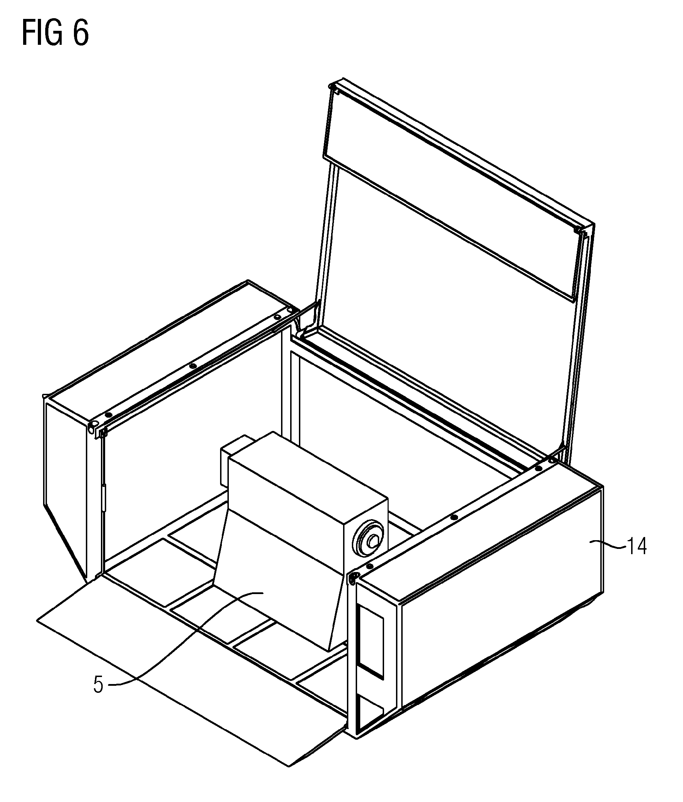

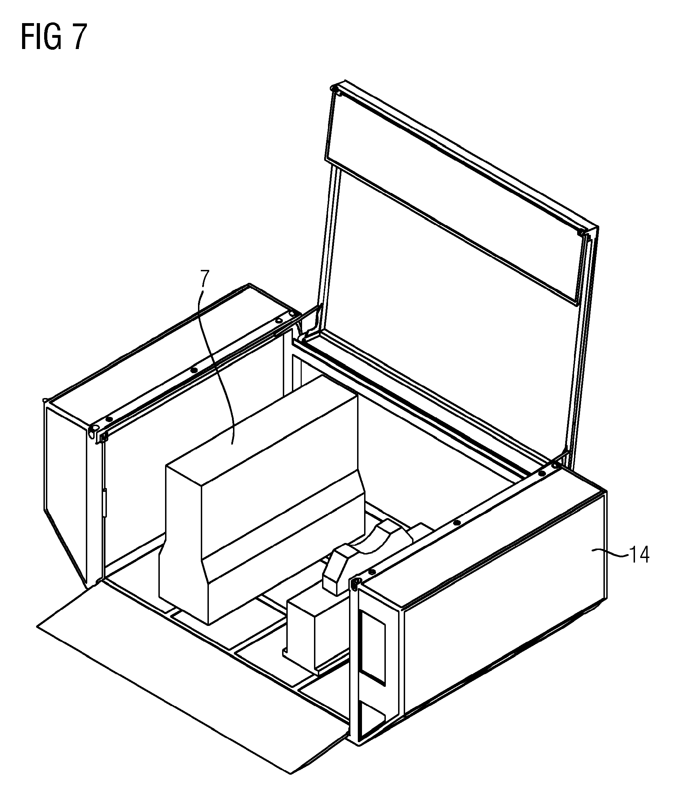

Ein wesentlicher Vorteil der erfindungsgemäßen CNC-Bearbeitungsmaschine 1 ist ihr modularer Aufbau, der es ermöglicht, die CNC-Bearbeitungsmaschine 1 in Einzelkomponenten und/oder in Teilkomponenten zu zerlegen, in Luftfrachtcontainern 14 zu verpacken, wie es zumindest teilweise in den Figuren 3 bis 7 dargestellt ist, und in den Luftfrachtcontainern 14 an den Bearbeitungsort eines Werkstücks zu transportieren. Zu diesem Zweck sind die Bodenplatten 2a-e, der Spindelstock 3, der Reitstock 5, der Lagerbock 7, der Lagerbock 8 sowie die Teilkomponenten 9a, 9b des Werkzeugmoduls 9 sehr leicht gebaut. Sie weisen jeweils ein Eigengewicht von weniger als 4,8 t auf, so dass das maximale Luftfrachtcontainerfüllgewicht der Luftfrachtcontainer 14 nicht überschritten wird. Um ein Eigengewicht von jeweils weniger als 4,8 t zu erzielen, musste zum einen das Werkzeugmodul 9 in zwei Teilkomponenten 9a, 9b unterteilt werden. Darüber hinaus waren aber auch eine Vielzahl von Einzelmaßnahmen erforderlich, um das Gewicht des Spindelstockes 3, des Reitstockes 5 und der Teilkomponenten 9a, 9b des Werkzeugmoduls 9 unter Aufrechterhaltung der erforderlichen Steifigkeit hinreichend zu reduzieren. Mit anderen Worten mussten diese Komponenten ausgehend von einer bekannten CNC-Bearbeitungsmaschine vollständig neu konzipiert werden. Eine weitere drastische Gewichtsreduktion der erfindungsgemäßen CNC-Bearbeitungsmaschine 1 gegenüber einer herkömmlichen CNC-Bearbeitungsmaschine eines vergleichbaren Typs wurde dadurch erzielt, dass die CNC-Bearbeitungsmaschine 1 nicht auf einem geschlossenen Maschinenbett sondern auf einzelnen, im bestimmungsgemäßen Zustand getrennt und voneinander beabstandet auf einem Untergrund angeordneten Bodenplatten 2a-e ruht. Gegenüber einem herkömmlichen Maschinenbett konnte auf diese Weise eine Verringerung des Gesamtgewichts von über 50% erzielt werden.

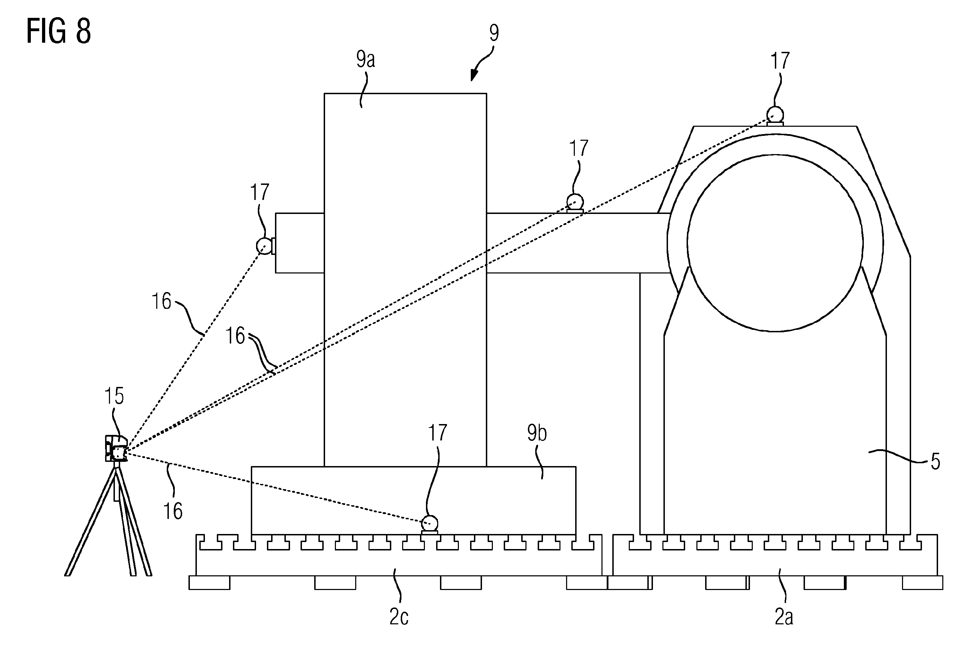

Zur Ausrichtung des Spindelstockes 3, des Reitstockes 5, der Lagerböcke 7,8 und des Werkzeugmoduls 9 relativ zueinander bei der Montage der CNC-Bearbeitungsmaschine 1 am Bearbeitungsort eines Werkstückes wird bevorzugt ein die Ausrichtung unterstützendes Ausrichtsystem verwendet, bei dem es sich vorteilhaft um ein Laserausrichtsystem 15 handelt, wie es schematisch in Figur 8 dargestellt ist. Das Laserausrichtsystem 15 ist derart ausgestaltet, dass ein Laserstrahl 16 nacheinander in einer vorbestimmten Reihenfolge automatisch auf Reflektoren 17 gerichtet wird, von denen jeweils vier an jeder der relativ zueinander auszurichtenden Komponenten 3, 5, 7, 8, 9 an geeigneten Positionen befestigt sind. Auf diese Weise werden die Ist-Positionen der jeweiligen Reflektoren 17 und somit der Komponenten erfasst. Die erfassten Ist-Positionen werden dann in einer Auswerteeinrichtung des Laserausrichtsystems 15 mit vorab definierten Soll-Positionen verglichen. Als Ergebnis des Vergleiches werden Anweisungen an das Bedienpersonal über eine entsprechende Ausgabeeinrichtung des Laserausrichtsystems 15, wie beispielsweise einen Monitor, ausgegeben, in welcher Art und Weise die Ist-Positionen der einzelnen Komponenten verändert werden müssen, um den Soll-Zustand herzustellen.

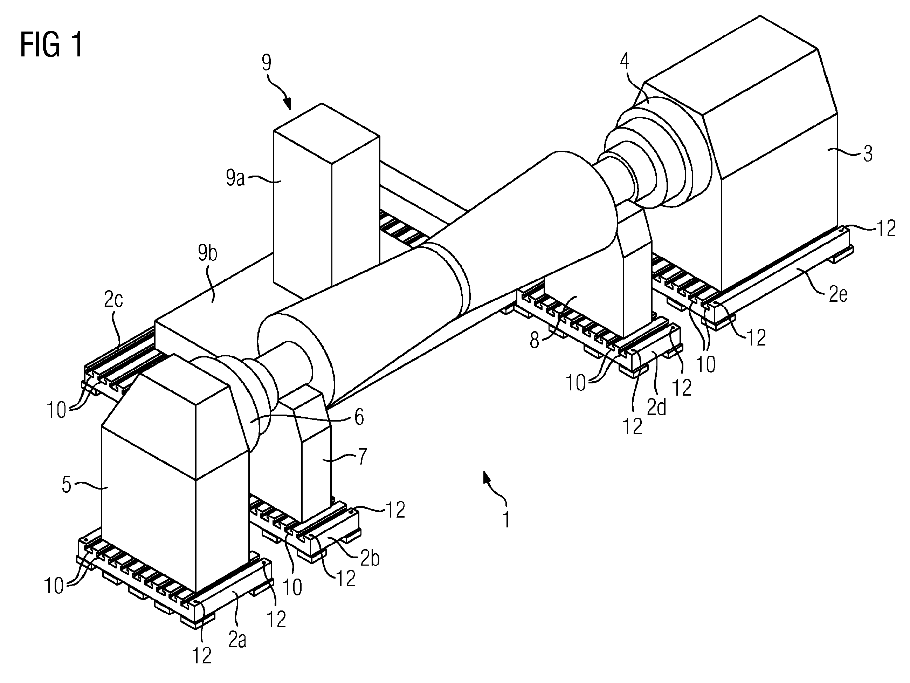

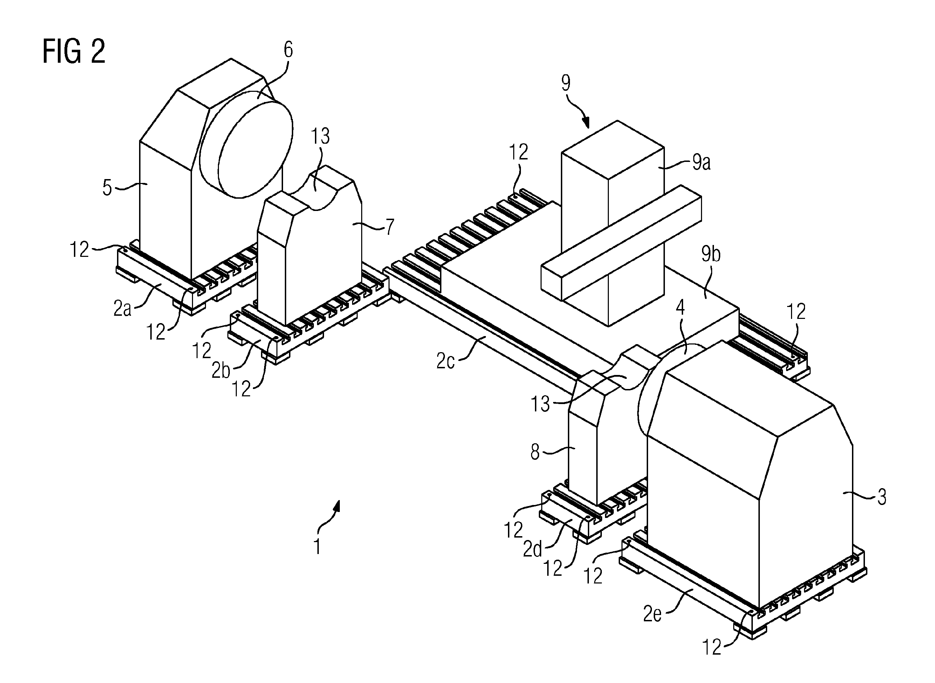

Zur Bearbeitung eines in einer Anlage eingesetzten Werkstückes 18 in Form eines Turbinenläufers, eines Generatorläufers oder eines Induktors wird die erfindungsgemäße CNC-Bearbeitungsmaschine 1 in einem ersten Schritt in ihre vorbestimmten Komponenten und Teilkomponenten in Form der Bodenplatten 2a-e, des Spindelstockes 3, des Reitstockes 5, des Lagerbockes 7, des Lagerbockes 8 sowie der oberen Teilkomponente 9a, und der unteren Teilkomponente 9b des Werkzeugmoduls 9 zerlegt. Gleiches gilt für weitere Komponenten in Form von Schaltschränken oder dergleichen. In einem weiteren Schritt werden die einzelnen Komponenten und Teilkomponenten in Luftfrachtcontainern 14 verpackt, wie es beispielhaft in den Figuren 3 bis 7 dargestellt ist. Es sollte klar sein, dass auf das Zerlegen und Verpacken natürlich verzichtet werden kann, wenn die Komponenten und Teilkomponenten bereits verstaut in den Luftfrachtcontainern 14 gelagert sind. Anschließend werden die Luftfrachtcontainer 14 zu der entsprechenden Anlage transportiert, wozu entsprechende Transportmittel verwendet werden, wie beispielsweise Flugzeuge, Züge, Lkw und dergleichen. Am Ort der Anlage erfolgt dann der Zusammenbau der CNC-Bearbeitungs- maschine, so dass der in Figur 2 dargestellte Zustand hergestellt wird. Daraufhin wird das Werkstück 18 unter Verwendung der CNC-Bearbeitungsmaschine 1 bearbeitet, wie es in Figur 1 gezeigt ist. Nach der Bearbeitung des Werkstückes 18 wird die CNC-Bearbeitungsmaschine 1 wieder in ihre Komponenten und Teilkomponenten zerlegt und in den Luftfrachtcontainern 14 verpackt, woraufhin diese abtransportiert werden.

Dank dieser Vorgehensweise werden die Stillstandzeiten der Anlage, in der das zu bearbeitende Werkstück 18 im Einsatz ist, gering gehalten, da das Werkstück nicht mehr zur CNC-Bearbeitungsmaschine transportiert werden muss.

Obwohl die Erfindung im Detail durch das bevorzugte Ausführungsbeispiel näher illustriert und beschrieben wurde, so ist die Erfindung nicht durch die offenbarten Beispiele eingeschränkt und andere Variationen können vom Fachmann hieraus abgeleitet werden, ohne den Schutzumfang der Erfindung zu verlassen.

## Patentansprüche

1. CNC-Bearbeitungsmaschine (1),
die zur Bearbeitung von Dampfturbinen- und Gasturbinen- sowie Generatorläufern ausgelegt ist,
mit einem Spindelstock (3), einem Reitstock (5), zumindest zwei Lagerböcken (7, 8) und wenigstens einem Werkzeugmodul (9), wobei das Werkzeugmodul (9) derart ausgelegt ist, dass es ein Bewegen eines an diesem gehaltenen Werkzeugs zumindest entlang der X-, Y- und Z-Achse der CNC-Bearbeitungsmaschine (1) gestattet,
**dadurch gekennzeichnet, dass**
die CNC-Bearbeitungsmaschine (1) mehrere Bodenplatten (2a-e) aufweist, wobei der Spindelstock (3), der Reitstock (5), die Lagerböcke (7, 8) und das Werkzeugmodul (9) jeweils an einer Bodenplatte (2a-e) lösbar befestigt sind, und wobei zumindest einige der Bodenplatten (2a-e) im bestimmungsgemäß montierten Zustand der CNC-Bearbeitungsmaschine (1) getrennt und voneinander beabstandet auf einem Untergrund angeordnet sind.

2. CNC-Bearbeitungsmaschine (1) nach Anspruch 1,
**dadurch gekennzeichnet, dass**
der Spindelstock (3), der Reitstock (5), die Lagerböcke (7, 8) und das Werkezugmodul (9) jeweils derartige Abmessungen aufweisen oder derartig in vorbestimmte Teilkomponenten (9a, 9b)zerlegbar ausgeführt sind, dass sie in Luftfrachtcontainern (14) aufgenommen und transportiert werden können.

3. CNC-Bearbeitungsmaschine (1) nach Anspruch 2,
**dadurch gekennzeichnet, dass**
das Eigengewicht des Spindelblocks (3), des Reitstocks (5), der Lagerböcke (7, 8) und des Werkzeugmoduls (9) oder das Eigengewicht ihrer Teilkomponenten (9a, 9b) jeweils 4,8 t oder weniger beträgt.

4. CNC-Bearbeitungsmaschine (1) nach einem der vorhergehenden Ansprüche,
**dadurch gekennzeichnet, dass**
die Bodenplatten (2a-e) an ihrer Oberseite jeweils mit Nuten (10) zur Befestigung des Spindelstocks (3), des Reitstocks (5), der Lagerböcke (7, 8) und des Werkzeugmoduls (9) versehen sind.

5. CNC-Bearbeitungsmaschine (1) nach einem der vorhergehenden Ansprüche,
**dadurch gekennzeichnet, dass**
die Bodenplatten (2a-e) mit als Sicherungspunkte dienenden Durchgangsbohrungen (12) versehen sind, in die Befestigungselemente zum Verdübeln der Bodenplatten (2a-e) an einem Untergrund einsetzbar sind.

6. CNC-Bearbeitungsmaschine (1) nach einem der vorhergehenden Ansprüche,
**dadurch gekennzeichnet, dass**
Höhenausrichtelemente zur Höhenausrichtung der Bodenplatten (2a-e) vorgesehen sind, die insbesondere lösbar mit den Bodenplatten (2a-e) verbunden werden können.

7. CNC-Bearbeitungsmaschine (1) nach einem der vorhergehenden Ansprüche,
**dadurch gekennzeichnet, dass**
das Werkzeugmodul (9) zur Aufnahme von Drehwerkzeugen, Schleifwerkzeugen und Fräswerkzeugen ausgelegt ist.

8. CNC-Bearbeitungsmaschine (1) nach einem der vorhergehenden Ansprüche,
**dadurch gekennzeichnet, dass**
die Lagerböcke (7, 8) im Bereich ihrer Lagerfläche eine hydrostatische Lagerschale (13) aufweisen.

9. CNC-Bearbeitungsmaschine (1) nach einem der vorhergehenden Ansprüche,
**dadurch gekennzeichnet, dass**
Spannfutter (4, 6) des Spindelstocks (3) und des Reitstocks (5) Spannbereiche von 600 mm bis 1200 mm aufweisen.

10. CNC-Bearbeitungsmaschine (1) nach einem der vorhergehenden Ansprüche,
**dadurch gekennzeichnet, dass**
diese für die Bearbeitung von Werkstücklängen von zumindest 2.000 mm, von Werkstückdurchmessern von zumindest 1.000 mm und eines Werkstückgewichtes von zumindest 10 t ausgelegt ist.

11. CNC-Bearbeitungsmaschine (1) nach Anspruch 10,
**dadurch gekennzeichnet, dass**
diese für die Bearbeitung von Werkstücklängen von 12.000 mm, von Werkstückdurchmessern von 4.500 mm und eines Werkstückgewichtes von 200 t ausgelegt ist.

12. CNC-Bearbeitungsmaschine (1) nach einem der vorhergehenden Ansprüche,
**dadurch gekennzeichnet, dass**
der Spindelstock (3), der Reitstock (5), die Lagerböcke (7, 8) und das Werkzeugmodul (9) jeweils an vorbestimmten Position mit mehreren Reflektoren (17) versehen sind, die derart ausgebildet und angeordnet sind, dass sich die besagten Komponenten (3, 5, 7, 8, 9) unter Verwendung eines Laserausrichtungssystems (15) relativ zueinander ausrichten lassen.

13. CNC-Bearbeitungsmaschine (1) nach Anspruch 12,
**dadurch gekennzeichnet, dass**
pro Komponente (3, 5, 7, 8, 9) wenigstens vier Reflektoren (17) vorgesehen sind.

14. Verfahren zur Bearbeitung wenigstens eines Werkstücks (18) in Form eines Dampfturbinen-, eines Gasturbinen- oder eines Generatorläufers einer Anlage unter Verwendung einer CNC-Bearbeitungsmaschine (1), insbesondere unter Verwendung einer CNC-Bearbeitungsmaschine nach einem der vorhergehenden Ansprüche, wobei das Verfahren die Schritte aufweist:
- Zerlegen der CNC-Bearbeitungsmaschine (1) in einzelne vorbestimmte Komponenten (3, 5, 7, 8, 9) und/oder Teilkomponenten (9a, 9b);
- Verpacken der einzelnen Komponenten (3, 5, 7, 8, 9) und/oder Teilkomponenten (9a, 9b) in Luftfrachtcontainern (14) ;
- Transportieren der Luftfrachtcontainer (14) zur Anlage;
- Zusammenbauen der CNC-Bearbeitungsmaschine (1);
- Bearbeiten des wenigstens einen Werkstückes (18) unter Verwendung der CNC-Bearbeitungsmaschine (1);
- Zerlegen der CNC-Bearbeitungsmaschine (1) in die vorbestimmten Komponenten (3, 5, 7, 8, 9) und/oder Teilkomponenten (9a, 9b);
- Verpacken der Komponenten (3, 5, 7, 8, 9) und/oder Teilkomponenten (9a, 9b) in den Luftfrachtcontainern (14);
- Abtransport der Luftfrachtcontainer (14).

15. Verfahren nach Anspruch 13,
bei dem der Zusammenbau der CNC-Bearbeitungsmaschine (1) unter Verwendung eines Laserausrichtsystems (15) erfolgt, wobei einzelne Komponenten (3, 5, 7, 8, 9) der CNC-Bearbeitungsmaschine (1) unter Einsatz des Laserausrichtsystems (15) relativ zueinander ausgerichtet werden.

16. Verfahren nach Anspruch 13 oder 14,
bei dem die CNC-Bearbeitungsmaschine (1) für die Bearbeitung von Werkstücklängen von zumindest 2.000 mm, von Werkstückdurchmessern von zumindest 1.000 mm und eines Werkstückgewichts von zumindest 10 t ausgelegt ist.
